# EUROPÄISCHE PATENTSCHRIFT

(11) **EP 0 720 757 B1**
(45) Veröffentlichungstag und Bekanntmachung des Hinweises auf die Patenterteilung: **15.12.1999**
(21) Anmeldenummer: 94926705.8
(22) Anmeldetag: 07.09.1994
(51) Int. Cl.: G06F 3/12

(54) **VERFAHREN UND EINRICHTUNG ZUR ELEKTRONISCHEN STRANGBILDUNG BEI DER AUFZEICHNUNG VON DRUCKBOGEN**
METHOD AND DEVICE FOR THE ELECTRONIC WEB FORMATION IN THE RECORDING OF PRINTER'S FORMS
PROCEDE ET SYSTEME DE FORMATION ELECTRONIQUE DE CORDONS DE FEUILLES D'IMPRESSION LORS DE L'ENREGISTREMENT DE CAHIERS

(30) Priorität: 07.09.1993 DE 4330305
(43) Veröffentlichungstag der Anmeldung: 10.07.1996
(73) Patentinhaber: Heidelberger Druckmaschinen Aktiengesellschaft, 69115 Heidelberg (DE)
(72) Erfinder: KASTENHOLZ, Peter, D-35510 Butzbach (DE); REERMANN, Andreas, D-61462 Königstein (DE)
(86) Internationale Anmeldenummer: DE9401023
(87) Internationale Veröffentlichungsnummer: WO9507506

(56) Entgegenhaltungen:
- EP-A- 0 319 891
- HEWLETT-PACKARD JOURNAL, Bd.43, Nr.4, August 1992, PALO ALTO US Seiten 93 - 102 'HP DESKWRITE C PRINTER DRIVER DEVELOPMENT'

## Beschreibung

Die Erfindung betrifft ein Verfahren und eine Einrichtung zur elektronischen Aufzeichnung von Druckbögen mit einer Druckbogen-Montagestation, einem Raster Image Processor (RIP) und einem Belichter (Recorder oder Imagesetter).

Die Montage der einzelnen Seiten zu Druckbögen kann manuell oder mittels einer Montagestation durchgeführt werden. Eine Montagestation ist ein "WYSIWIG-Bildschirmarbeitsplatz" (WYSIWIG = what you see is what you get), an welchem unter Sichtkontrolle mehrere Seiten, die als sog. PostScript-Seiten vorliegen, zu einem Bogen zusammengefaßt werden. Aufbau und allgemeine Funktionsweise einer solchen Druckbogen-Montagestation sind in dem Prospekt "Signastation" der Firma Linotype-Hell, Deutschland, Seiten 1 bis 8, Bestell-Nr. 1292T MDO Lino 001/4d, 188-198 FHM, beschrieben. Der montierte Bogen wird als PostScript-Dokument gedruckt und beinhaltet sämtliche Informationen, die für eine sog. durckkonforme Ausgabe nötig sind. PostScript ist eine Seitenbeschreibungssprache, die von der Fa. Adobe Systems, Mountain-view, Ca., U.S.A. entwickelt, im Markt eingeführt worden und zum Weltstandard geworden ist. Diese Seitenbeschreibungssprache ist beispielsweise in dem Manual "Postscript Language Reference Manual, Second Edition, Addison-Wesley Publishing Company, Inc., ISBN 0-201-18127-4", beschrieben. Es handelt sich um eine Programmsprache, die auf sog RlP's (RIP = Raster Image Processor) abläuft, an die ein Filmbelichter, auch Recorder oder Imagesetter genannt, zum Ausgeben der Seiten auf Film angeschlossen ist. Das RIP dient u.a. dazu, die aufzuzeichnenden Informationen in Maschinenbefehle, die den Recorder ansteuern, umzuwandeln. Recorder oder Imagesetter sind reine Aufzeichnungsgeräte ohne eigene Intelligenz, die nur einzelne Pixel (Device Pixel) aufzeichnen können. Bei diesen Programmen, auch DTP-Programme (DTP = Desktop Publishing) genannt, wird ein sog. PostScript-Job erstellt, in dem mehrere Seiten hintereinander in einer Datei (File) stehen. Diese Jobs werden auch "Print-to-Disk-Dateien" genannt und können mehrere Megabytes groß sein.

Ein Programm zum Erstellen solcher Jobs ist in Hewlett-Packard Journal, Band 43, Nr. 4, August 1992, Seiten 93-102, beschrieben. Das dort beschriebene Programm ,,Printer Driver" stellt ein Interface zwischen einem Anwenderprogramm und einem Drucker dar. Das Programm verbindet dabei Benutzer, Anwendung , Betriebssystem und Drucker und erlaubt im Dialog den Transfer der entsprechenden Daten und Befehle, um einen Druckjob zu erzeugen und über den Drucker auszugeben.

Die eingangs genannte Montagestation und das RIP sind Bestandteile eines solchen Systems, bei dem fertige Druckbögen für die Ausgabe auf PostScript-Belichtern aufbereitet werden. Die Kommunikation zwischen den einzelnen Komponenten des Systems erfolgt in der Regel über ein Netzwerk. Die Druckbogen-Montagestation schickt dabei ganze Bogen zum RIP, die dort als eine Seite behandelt werden. Da es sich um große Dateien handelt, deren Verarbeitung erhebliche Rechenzeiten erfordern, wirkt sich die Verarbeitung der ganzen Seiten auf dem RIP ungünstig auf die Auslastung des Netzes aus. Außerdem wird das RIP langsam, was auch die Ausgabe des Films verzögert. Das Laufzeitverhalten und damit die Performance des gesamten Seitenmontagesystems wird also negativ dadurch beeinflußt, daß das RIP den ganzen Druckbogen wie eine einzelne Seite behandelt.

Der Erfindung liegt daher die Aufgabe zugrunde, die Effizienz des Bogen-Montagesystems in Verbindung mit einer besseren Auslastung des RIP's und des Netzes sowie einer schnelleren Ausgabe des Films zu verbessern.

Die Erfindung gemäß Anspruch 1 erreicht dies dadurch, daß der komplette Druckbogen in Aufzeichnungsrichtung in mehrere einzelne Stränge zerlegt wird, die an den Raster Image Processor gegeben werden wobei diese Stränge von dem Raster Image Processor als ganze Seiten erkannt werden und wie ganze Seiten behandelt werden. Die von dem RIP ausgegebenen Stränge werden dann mittels des Recorders aufgezeichnet. Hierzu ist es erforderlich, daß der Recorder im Start/Stop-Betrieb arbeitet, da ein solcher Recorder an den Stranggrenzen anhalten kann und die Stränge nahtlos aneinander fügen kann. Solche Recorder, meist Laserrecorder, belichten die einzelnen Pixel zeilenweise. Der Recorder kann nach jeder Zeile anhalten und somit auch an den Grenzen der einzelnen Stränge. So können die Stränge zeilengenau zusammengefügt und als komplette Druckbogen wieder ausgegeben werden. Als Resultat sind also mehrere Seiten zu einem Strang zusammengefaßt, wobei mehrere Stränge einen Druckbogen bilden.

Wird ein Recorder verwendet, der nicht im Start/Stop-Betrieb arbeitet, so wird gemäß einer vorteilhaften Weiterbildung der Erfindung zwischen RIP und Recorder ein Zwischenspeicher (Pagebuffer) entsprechender Speicherkapazität, geschaltet, der die Stränge wieder zu ganzen Seiten zusammengefügt.

Vorteilhafte Weiterbildungen der Erfindung sind in den Unteransprüchen 2 bis 4 angegeben.

Die Erfindung wird im folgenden anhand der Figuren 1 bis 3 näher erläutert. Es zeigen:
- Fig. 1: eine Prinzipdarstellung für die Aufteilung eines Druckbogens in einzelne Stränge,
- Fig. 2: eine Ausführung der Erfindung mit einem Recorder, der im Start/Stop-Betrieb arbeitet u nd
- Fig. 3: eine Ausführung der Erfindung mit einem Recorder, der nicht im Start/Stop-Betrieb arbeitet.

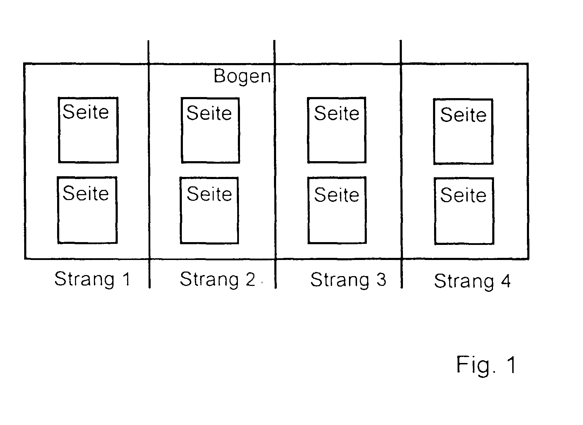

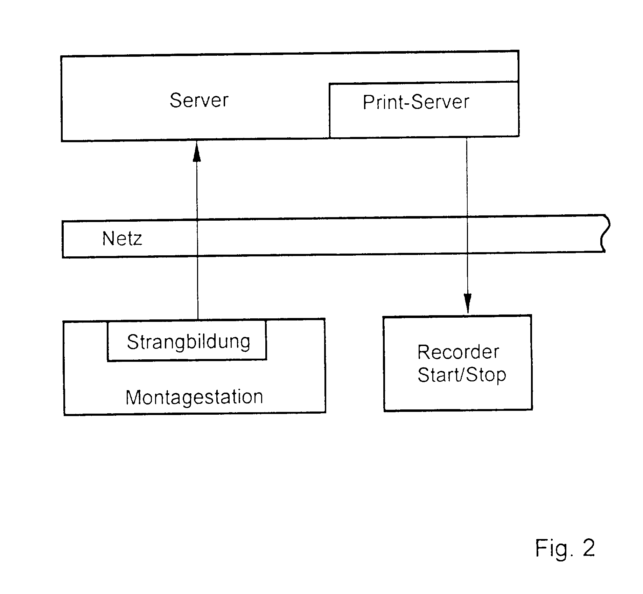

In Fig. 1 wird gezeigt, wie der Druckbogen in einzelne Stränge zerlegt wird, z.B. in vier Stränge. Ein Strang kann alle die Seiten umfassen, die vertikal oder horizontal in einer Reihe liegen. Dies ist datentechnisch äußerst einfach, da nur die Datei, die den gesamten Druckbogen beschreibt, quer zur Schreibrichtung des Recorders in einzelne Streifen zerlegt werden braucht. Da die Lagekoordinaten der einzelnen Seiten vom Ausschießen her bekannt sind, wird die Strangbildung somit anhand dieser Koordinaten bzw. Adressen gemäß Fig. 1 vorgenommen. Die Strangbildung erfolgt in der Montagestation der Fig. 2 Ausgangsdatei ist die PostScript-Bogen-Datei, die gemäß dem Stand der Technik aus einzelnen Teilen (Seiten) gemäß dem Ausschießschema erstellt worden ist. Es kann aber auch der Druckbogen gemäß der parallel laufenden PCT-Patentanmeldung der Anmelderin, "Verfahren zur elektronischen Montage von Druckbogen", angemeldet 07.09.94, deutsche Priorität vom 07.09.93, Aktenzeichen P 43 30 242.4 erstellt werden. In dieser Patentanmeldung wird ein Verfahren angegeben, bei dem mittels einer Montagestation in Verbindung mit einem Server, die beide über ein Netzwerk kommunizieren, eine Bogen-Post-Script-Datei erstellt wird, die sämtliche Daten zur Ausgabe des Druckbogens enthält. Diese Datei wird von dem mit "Print-Server" bezeichneten Teil des Servers direkt an das RIP gegeben. Nach dem erfindungsgemäßen Verfahren zur elektronischen Strangbildung bei der Aufzeichnung von Druckbogen wird darüber hinaus der komplette Bogen innerhalb der Montagestation in Aufzeichnungsrichtung (Fast-Scan-Richtung) in einzelne Stränge zerlegt, die zum Server gegeben werden und dort mit den Seiteninhalten versehen werden. Bei dieser Strangbildung berechnet der RIP zuerst nur einen Strang, z.B. den Strang 1 und sendet das Ergebnis an den Belichter. Parallel zu dem Sendevorgang berechnet der RIP dann den zweiten Strang. Da der Belichter in der Lage ist, genau auf der Stranggrenze anzuhalten, kann der zweite Strang ohne Versatz anschließend belichtet werden.

Die Stränge werden dann über den Server an das RIP weitergegeben und vom RIP wie einzelne PostScript-Seiten behandelt. Die Stränge werden anschließend vom RIP an den Recorder gegeben und im Recorder wieder zu ganzen Bögen zusammengesetzt. Wird ein Recorder mit Start/Stop-Betrieb verwendet, macht sich die Strangbildung die Eigenschaft dieser Belichter zunutze, genau nach der Belichtung einer Scanlinie anzuhalten zu können. Hierdurch wird ermöglicht, am Ende eines Strangs anzuhalten und den nächsten Strang nahtlos anzufügen. Es schließt sich also die erste Zeile des zweiten Strangs an die letzte Zeile des ersten Strangs nahtlos an.

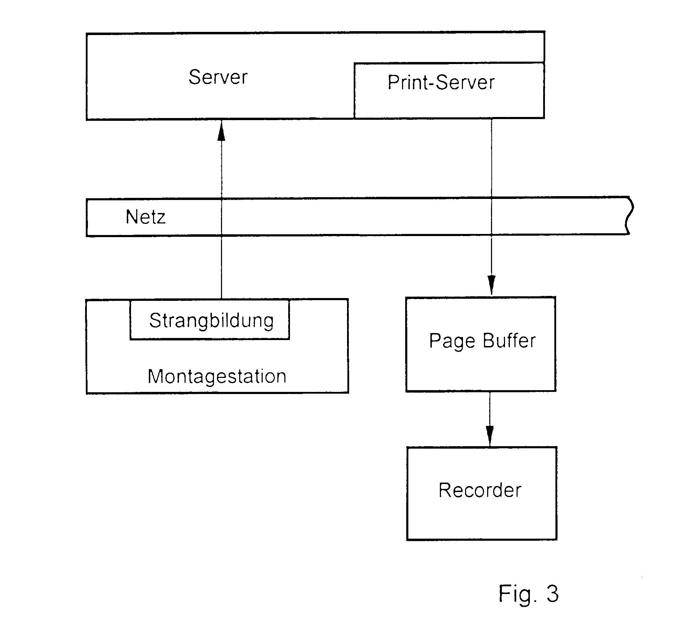

Wird gemäß Fig 3 ein Recorder verwendet, der nicht im Start/Stop-Betrieb arbeitet, so ist ein Zwischenspeicher zwischen RIP und Recorder vorgesehen, in dem die Stränge wieder zu einem kompletten Druckbogen zusammengesetzt werden. Der Recorder kann dann den gesamten Druckbogen in einem Durchgang belichten.

Das Verfahren "Strangbildung" wird also eingesetzt, um einen besseren Durchsatz zu erreichen. Außerdem werden mögliche Fehlbelichtungen vermieden. Dies führt zu einer höheren Betriebssicherheit.

Außerdem kommt folgendes hinzu. Da ein RIP nur über begrenzte Ressourcen, wie z.B Speicherkapazität verfügt, kann das Berechnen eines ganzen Bogens in manchen Fällen unmöglich sein, da nicht genügend Speicher vorhanden ist. Dies ist bei der Strangbildung ausgeschlossen. Bei der Strangbildung ist insgesamt die RIP-Auslastung besser, da ein überlappendes Berechnen und Belichten ermöglicht wird.

## Patentansprüche

1. Verfahren zur elektronischen Aufzeichnung von Druckbögen mit einer Druckbogen-Montagestation, einem Raster Image Processor (RIP) und einem Belichter (Recorder oder Imagesetter), bei dem mehrere Seiten zu einem Strang zusammengefaßt werden und mehrere Stänge einen Druckbogen bilden, dadurch gekennzeichnet, daß
der komplette Druckbogen in Aufzeichnungsrichtung in mehrere einzelne Stränge zerlegt wird, die an den Raster Image Processor gegeben und von dem Raster Image Processor wie ganze Seiten behandelt werden **und**
die Stränge an einem Seitenspeicher (Pagebuffer) oder Belichter (Recorder oder Imagesetter) gegeben, wieder zu ganzen Druckbögen zusammengesetzt und als PostScript-Dokument in Form eines kompletten Druckbogens ausgegeben werden.

2. Verfahren nach Anspruch 1, dadurch gekennzeichnet, daß
Im Raster Image Processor zunächst nur einen Strang berechnet wird, der nach Fertigstellung an den Belichter (Recorder oder Imagesetter) gesendet wird und
daß parallel zum Sendevorgang im Raster Image Processor der nächste Strang berechnet wird.

3. Einrichtung zur Durchführung des Verfahrens nach Anspruch 1 oder 2, dadurch gekennzeichnet, daß
eine unter Sichtkontrolle arbeitende Druckbogen-Montagestation vorgesehen ist, durch die ganze Druckbögen in einzelne Stränge zerlegbar sind,
die Druckbogen-Montagestation über einen Server mit einem Raster Image Processor verbunden ist, durch den die einzelnen Stränge wie ganze Seiten verarbeitbar sind und daß
an dem Raster Image Processor ein Recorder angeschlossen ist, der im Start/Stop-Betrieb arbeitet.

4. Einrichtung zur Durchführung des Verfahrens nach Anspruch 1. oder 2, **dadurch gekennzeichnet**, daß zwischen Raster Image Processor und Recorder ein Zwischenspeicher (Pagebuffer) vorgesehen ist, durch den die Stränge wieder zu ganzen Druckbögen zusammensetzbar und als PostScript-Dokument in Form eines kompletten Druckbogens an einen mit dem Zwischenspeicher verbundenen Recorder ausgebbar sind.

## Claims

1. A method for the electronic recording of printed sheets with a printed sheet composition station, a raster image processor (RIP) and an exposer (recorder or image setter), characterised in that
the complete printed sheet is divided up in the recording direction into several individual strings, which are fed to the raster image processor and are treated by the raster image processor as whole pages and
the strings are fed to a page memory (page buffer) or exposer (recorder or image setter), are composed into whole printed sheets again and are issued as a PostScript document in the form of a complete printed sheet.

2. A method according to Claim 1, characterised in that
in the raster image processor firstly only one string is calculated, which after completion is sent to the exposer (recorder or image setter) and
that parallel to the sending process, the next string is calculated in the raster image processor.

3. An arrangement to carry out the method according to Claim 1 or 2, characterised in that
a printed sheet composition station is provided, operating under visual control, through which whole printed sheets are able to be divided up into individual strings,
the printed sheet composition station is connected via a server with a raster image processor, through which the individual strings are able to be processed as whole pages and that
a recorder is connected to the raster image processor, which recorder operates in start/stop operation.

4. An arrangement to carry out the method according to Claim 1 or 2, characterised in that between the raster image processor and the recorder an intermediate memory (page buffer) is provided, through which the strings are able to be composed into whole printed sheets again and are able to be issued as a PostScript document in the form of a complete printed sheet to a recorder which is connected with the intermediate memory.

## Revendications

1. Procédé d'enregistrement électronique de feuille imprimée à l'aide d'une station de montage de feuille imprimée, d'un processeur d'images tramées (RIP) et d'un appareil d'exposition enregistreur d'image, selon lequel on réunit plusieurs pages en une colonne et plusieurs colonnes en une feuille imprimée,
caractérisé en ce qu'
on décompose la feuille imprimée complète en plusieurs colonnes distinctes dans la direction d'enregistrement, ces colonnes étant fournies à un processeur de tramage d'images RIP qui les traite comme des pages entières et,
les colonnes sont fournies à une mémoire de page (mémoire tampon de page) ou un appareil d'exposition enregistreur d'image, pour reformer des feuilles d'impression complètes et on émet une feuille d'impression complète comme document PostScript.

2. Procédé selon la revendication 1,
caractérisé en ce que
dans le processeur de tramage d'image, on calcule tout d'abord seulement une colonne qui est envoyée après fabrication à un appareil d'exposition enregistreur d'image et, en parallèle à l'opération d'émission, on calcule la colonne suivante dans le processeur de travail d'image RIP.

3. Installation pour la mise en oeuvre du procédé selon les revendications 1 ou 2,
caractérisée par
- une station de montage de feuille d'impression travaillant sous un contrôle visuel, et qui permet de décomposer l'ensemble de la feuille d'impression en différentes colonnes,
- on relie la station de montage de feuille d'impression par un serveur à un processeur de tramage d'image RIP qui combine de nouveau les différentes colonnes en pages entières et,
- on relie un appareil d'enregistrement au processeur de tramage d'image, cet enregistreur fonctionnant en mode marche/arrêt.

4. Installation pour la mise en oeuvre du procédé selon la revendication 1 ou 2,
caractérisée par
une mémoire intermédiaire (mémoire tampon de page) entre le processeur de tramage d'image RIP et l'enregistreur, qui recombine les colonnes en feuilles entières et les émet comme document PostScript sous la forme d'une feuille d'impression complète à un appareil d'enregistrement relié à la mémoire intermédiaire.
